# EUROPEAN PATENT SPECIFICATION

(11) **EP 1 834 450 B1**
(45) Date of publication and mention of the grant of the patent: **24.06.2009**
(21) Application number: 05818440.9
(22) Date of filing: 08.11.2005
(51) Int. Cl.: H04L 12/56, H04L 12/28, H04M 1/60

(54) **METHOD AND APPARATUS FOR SECURE PAIRING**
VERFAHREN UND VORRICHTUNG ZUR SICHEREN PAARUNG
PROCEDE ET APPAREIL PERMETTANT UN COUPLAGE SECURISE

(30) Priority: 28.12.2004 US 23952
(43) Date of publication of application: 19.09.2007
(73) Proprietor: Motorola, Inc., A Corporation of the State of Delaware, Schaumburg, IL 60196 (US)
(72) Inventor: GITZINGER, Thomas, E., Libertyville, IL 60048 (US)
(74) Representative: Openshaw, Paul Malcolm
(86) International application number: PCT/US2005/040467
(87) International publication number: WO 2006/071364

(56) References cited:
- US-A1- 2003 045 235
- US-A1- 2003 050 009

## Description

### FIELD OF THE INVENTION

The present invention relates generally to establishing a communication link between two wireless devices and more particularly the secure pairing thereof.

### BACKGROUND OF THE INVENTION

Pairing of electronic devices for wireless communication is known. Pairing may be achieved by each device sharing a device Identification (ID) to establish or maintain a communication link. Once paired, communications can be shared between the two devices using the established communication link. For example, the ID for each device can be encoded or otherwise included in transmissions between the devices. The receiving device utilizes only that information transmitted with a recognized device ID. In short range communication systems such as those using the Bluetooth™ protocol, the device ID is transmitted during the pairing and discovery process allowing devices that are in range of one another to identify each device and subsequently establish a wireless link. The device IDs however are transmitted on known channels defined in the communication protocol and these communications may be insecure. Thus, communications between the devices can be intercepted by unintended recipients.

For secure communications, it is known to have devices share a code, such as a pin. The communications between the devices include the code, or the information is encoded using the code prior to transmission such that only the intended recipient can decode the communication thereby preventing use by a device lacking access to the code. However, it is necessary that the code in known systems be shared wirelessly or manually entered. For manual entry a user interface, such as a display and keypad is required. Providing a user interface for entry of the code to a device that lacks a need to a suitable user interface may add undesirable cost and size requirements. Manual entry can also be cumbersome and not intuitive for the user. Wireless sharing of the code can be undesirable if the communication is vulnerable to over-the-air interception. Furthermore, the integrity of the code, also known as the "trust chain" is diminished thereby increasing the potential concern for communication interception by unintended recipients.

US 2003/045235 A discloses a smart BLUETOOTH interface gateway device that allows a BLUETOOTH headset to establish an audio connection and communicate with a conventional wireless phone (e.g., a wireless phone that does not have BLUETOOTH installed).

US 2003/050009 A discloses a BLUETOOTH device wherein the output RF transmission power level during pairing is purposefully reduced from otherwise conventional or normal communication levels to a low power level, greatly reducing the range of possible interception.

What is needed is a method and apparatus for establishing the secure pairing of communication devices that is intuitive and less susceptible to interception by unintended recipients. The various aspects, features and advantages of the disclosure will become more fully apparent to those having ordinary skill in the art upon careful consideration of the following Detailed Description thereof with the accompanying drawings described below.

### BRIEF DESCRIPTION OF THE DRAWINGS

The various aspects, features and advantages of the present invention will become more fully apparent to those having ordinary skill in the art upon careful consideration of the following Detailed Description of the Drawings with the accompanying drawings described below.
FIG. 1 is an exemplary first device and second device.
FIG. 2 is an exemplary block diagram of the first device and the second device.
FIG. 3 is an exemplary pairing flow diagram.
FIG. 4 is an exemplary wireless audio device and audio transmitter.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present invention.

### DETAILED DESCRIPTION OF THE DRAWINGS

Before describing in detail the particular secure communication link establishment method and apparatus in accordance with the present invention, it should be understood that the present invention resides primarily in combinations of method steps and apparatus components related thereto. Accordingly, the apparatus components and method steps have been represented where appropriate by conventional symbols in the drawings, showing only those specific details that are pertinent to understanding the present invention so as not to obscure the disclosure with details that will be readily apparent to those of ordinary skill in the art having the benefit of the description herein.

Disclosed herein is a method and apparatus for securely establishing a communication link between wireless communication devices. The method for securely linking wireless devices comprises transmitting from a first device secure information, such as a Bluetooth™ code and pin for example, over a single direction physical link. Next the method comprises receiving from a second device the confirmation to the receipt of the secure information via a wireless link. Then the method comprises communicating over a link using at least a portion of the secure information to maintain a secure link. In this exemplary embodiment, the link is a wireless link.

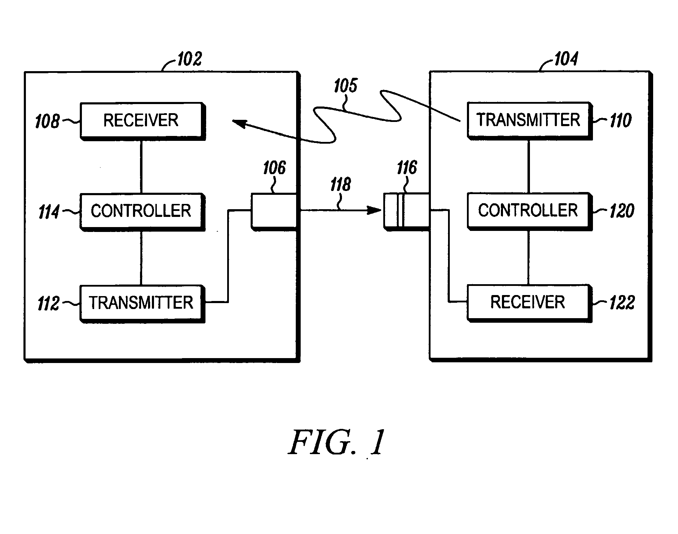

Turning to FIG. 1, exemplary first device 102 and second device 104 are shown. The first device 102 comprises a first housing and the second device 104 comprises a second housing. In this exemplary embodiment, the first device 102 is exemplified as a wireless audio device or wireless audio manager that wirelessly receives audio, over a wireless link 105, by a receiver 108 from a transmitter 110, of the second device 104. The first device 102 supplies information to a physical connector 106 from a transmitter 112 such as an audio coder decoder (CODEC) or the like. The transmitter 112 is coupled to a controller 114. The physical connector 106, which is exemplified as an audio headset receptacle, is connectable via connector to transducers such as speakers. The speakers may include open air speakers, headphones, earphone speakers or the like.

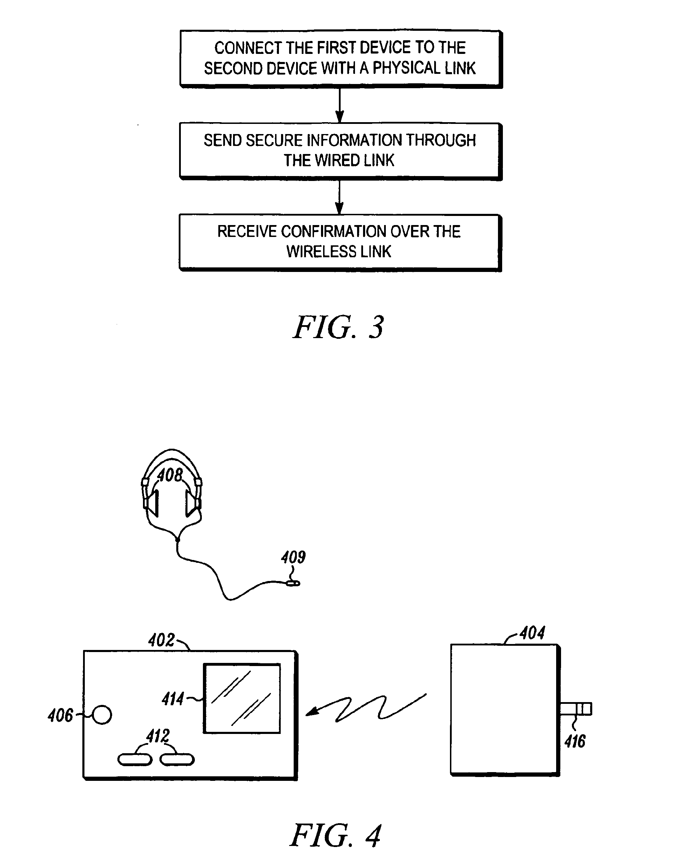

The information may also be sent from the physical connector 106 to an audio input of a third device (FIG. 4) such as the line input of a stereo receiver or the like. The first device 102 may also have input buttons, a display, a power source (not shown) such as a receptacle for disposable batteries or rechargeable batteries, an AC power input, or the like.

The second device 104 in one exemplary embodiment is an audio transmitter 104 that comprises a housing which carries a physical connector 116, which in this exemplary embodiment is an audio headset plug 116. The audio headset plug 116 is an audio input configured to receive audio signals and is adapted to plug into a complimentary physical connector 106 which is a line out providing audio signals. The physical connector 116 is coupled to a receiver 122. The physical connector 116 is also adapted to connect with or couple to the physical connector 106 of the wireless audio device 102 both physically and electrically, to thereby form the physical link 118 in order to receive information therefrom. The second device 104 also includes a transmitter 110 to wirelessly transmit information over the wireless link 105 to a receiver 108 and the audio received through the physical connector 116. The second device has a controller 120 that is coupled to the transmitter 110 and the receiver 122

The various elements of the exemplary wireless audio device 102 and the exemplary second device 104, for example the controller, memory, inputs, outputs, connectors are disposed generally in a housing. A display, if present, is often mounted on the housing whether it is a part of a one piece assembly, or a multiple piece assembly where the housing elements move relative to one another. The wireless audio device 102 may also include a keypad or buttons. The location and arrangement of these exemplary wireless handset elements is only an exemplary application and is immaterial to the establishment of a secure communication link, which is discussed more fully below.

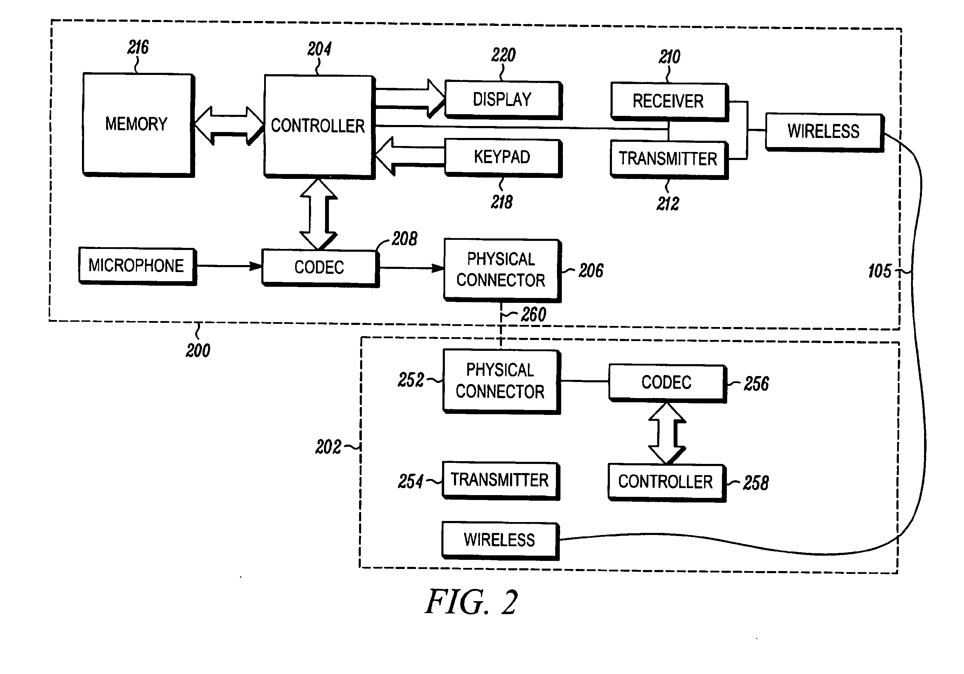

FIG. 2 is an exemplary block diagram of the wireless audio device circuitry 200 and the audio transmitter circuitry 202. The wireless audio device circuitry 200 comprises, a controller 204, an physical connector 206, which in this exemplary embodiment is an audio headset receptacle 206 that is electrically coupled to a coder/decoder (CODEC) 208. The wireless audio device 200 also includes a receiver 210 and optionally a transmitter 212 as in the exemplary embodiment. Audio signals are received through the receiver 210 and sent to the CODEC 208 to be decoded and converted from digital to analog signals. The CODEC 208 is also coupled to the controller 204. From the CODEC 208, the analog audio signals are passed on to the physical connector 206 to be output from the device 102. The audio signals may also be stored in memory 216 after being received by the receiver 210 for subsequent retrieval and presentation to the physical connector 206 or the transmitter 212. A microphone 222 and an antenna 224 may also be carried on the wireless audio device 102. The microphone is coupled to the CODEC 208. The antenna is coupled to the receiver 210 and the transmitter 212. A speaker (not shown) may be carried on the wireless audio device 102. The speaker is coupled to the CODEC 208. The speaker may provide alerts or audio signals such as must that is streamed to or stored in the wireless audio device 102.

A user interface is carried on the wireless audio device 102 and includes a keypad 218 and a display 220 in this exemplary embodiment. The keypad 218 includes volume control buttons which are coupled to the controller 204. The volume control buttons control the volume of the audio output through the physical connector 206. The display 220 in this exemplary embodiment presents control information thereon regarding the operation of the device and information relating to the audio received at and output by the wireless audio device 102. The control circuitry, which is the controller 204 in this exemplary embodiment, establishes and maintains pairing between the other wireless devices amongst performing other operational functions.

The second device circuitry 250 of the second device 104 includes an physical connector 252 which in this exemplary embodiment is an audio headset plug. The physical connector 252 is complimentary to the physical connector 206 of the wireless audio device 102. The connection of the audio headset receptacle 206 and the audio headset plug 252 forms a wired link 105, 260 between the wireless audio device 200 and the transmitter 202. The wired link 105, 260 supports communication in only a single direction; from the wireless audio device circuitry 200 to the transmitter 202.

The second device circuitry 250 also includes a wireless transmitter 254, a CODEC 256 and controller 258. The transmitter 254 and the CODEC 256 are coupled to the controller 258. The CODEC 256 is also electrically to the transmitter 254 and sends audio signals received by the audio connector 252 to the transmitter 254. The transmitter 254 communicates with the receiver 210 of the wireless audio device 102 thereby forming a wireless link 105. The wireless link 105 supports communications in only one direction.

The second device 104 also receives information from the wireless audio device 102 through the wired link 105, 260 when coupled thereto by the physical connectors (206, 252). This information is received and processed by the controller 258 and then may be transmitted, immediately or subsequently by the transmitter 254 to the receiver 210 of the wireless audio device 102 when establishing or maintaining secure pairing.

The wireless transmission between the devices may follow a myriad of protocols and standards. For example, in this exemplary embodiment, the circuitry of both the first device 102 and the second device 104 are configured to transmit and receive radio frequency (RF) signals using the Bluetooth™ protocol and standard. The initial connection or link formed between the two devices is established by performing what is known in the art as "pairing." Pairing is the procedure for establishing that communications from one device are to be received by an intended device or devices. Peer to peer networks such as Bluetooth™ generally use a protocol to establish which device to devices is the intended recipient of the communication be output from the device. One of ordinary skill in the art will appreciate the pairing operation for devices operating in a peer to peer network such as Bluetooth™ or the like.

Wireless devices exchanging information may do so over a secure link or non-secure link, as in this exemplary embodiment which employs the Bluetooth™ protocol and standard. For secure pairing, in one exemplary embodiment, the second device 104 receives information from the wireless audio device 102 over the wired link 260 via the headset plug 116, 252 and headset receptacle 106, 206 when connected. The second device 104 communicates confirmation of the receipt of the information to the wireless audio device 102 via the wireless link 105 to pair the wireless audio device 102 and second devices 104 together.

An exemplary pairing method for establishing a secure communication link, illustrated in FIG 3, shows the pairing of the first device 102 to the second device 104 thereby initiating and/or maintaining a secure communication path, which is a wireless link 105, between the two devices in this exemplary embodiment. The secure communication path is established to prevent the information, audio signals in this exemplary embodiment, transmitted to the wireless audio device 102 from being intercepted and decoded by an unintended recipient.

The method of securely pairing the wireless devices, comprises transmitting from the first device 102 secure information, which in this exemplary embodiment is a Bluetooth™ code and a pin, over the wired link 260 (i.e. the first device audio connector 206 and the second device audio connector 252). The next step comprises receiving over a wireless link 105 from the second device 202 a confirmation to the receipt of the secure information. Then, communicating over a wireless link 105 using at least a portion of the secure information to maintain a secure link. The communicating over the wireless link 105 may be the same wireless link as in the previous step or a different wireless link. A different wireless link may be a different channel, a different hopping sequence in a frequency hopping system or coded channel as in code division multiple access (CDMA). It is to be understood by the skilled artisans that a wired link may be formed in various ways.

In step 302, the physical connector 116 of the second device 104 is connected to or plugged into the physical connector 106 of the first device 102. In one exemplary embodiment, the first device 102 a pairing mode is entered into manually. In this embodiment, the control circuitry of the communication device supports a manual pairing mode that is initiated by the selection of a pairing mode wherein the user selects by button of the user interface the pairing mode. If the first device 102 is coupled to the second device 104 the secure information is sent via the wired link 260.

In another exemplary embodiment, the first device 102 automatically determines that the second device 104 is a device that is capable of being paired by a secure link to the first device 102. The control circuitry supports that automatic pairing and is initiated upon connection of the audio headset plug to the audio headset receptacle.

Once in pairing mode and the first device is connected to the second device 104, the first device 102 will send 304 secure information for pairing to the second device 104 through the wired link 260. In this exemplary embodiment, the wireless audio device 102 also sends a Bluetooth™ ID that is unique to the wireless audio device. The wireless audio device 102 receives 306 a confirmation from the second device 104 over the wireless link 105 of the receipt of the code and a second device Bluetooth™ ID that is unique to the second device 104. Both devices have the code sent by the first device and each others respective unique Bluetooth™ ID.

Two independent paths are therefore used, the wired link 252 and the wireless link 105 to establish the secure pairing of the devices 102, 104. The wired path 252 is the first path and the wireless path 105 is the second path in this exemplary embodiment. The second device 104 may send the confirmation wirelessly back to the first device 102 substantially immediately following the receipt from the first device 102 or after a time period which may be a predetermined or randomly generated time period. The second device 104 may send the confirmation while still connected via the first audio connector 206 and the second audio connector 252 or after the first device 102 has been disengaged thereby uncoupling the wired link 260. In one exemplary embodiment, the first device 102 remains coupled to the second device 104 until the confirmation is received over the wireless link 105. Once the confirmation has been received, the first device 102 may acknowledged by presenting information to the user on the user interface such as an audible beep or a message on the display that pairing has been established and the two devices may be disengaged.

To receive the communication by the second device 104, the wireless audio device 102 executes an audio discovering and connecting procedure. The audio source specific parameters (e.g. corresponding Bluetooth A2DP profile, MAC address, current audio source status, etc.) are used during the audio discovering and connecting procedure execution. There are three possible results that discovering and connecting procedure may produce: (i) a wireless audio device 102 found and established connection with audio source, (ii) a wireless audio device 102 found but could not establish connection with audio source, and (iii) a wireless audio device 102 could not find the audio source while executing audio discovering and connecting procedure. The result is saved as an audio status in the memory 216. Regardless of the saved audio status, the wireless audio device 102 enters the Phone Searching and Connecting state.

Turning to FIG. 4, an exemplary first device 402 and second device 404 is shown. The first device 402 comprises a first housing and the second device comprises a second housing 404. In this exemplary embodiment, the first device 402 is a wireless audio device that wirelessly receives audio from a transmitting source, such as the second device 404. The first device 402 supplies the audio signals to analog audio connector 406. The audio connector 406, which is exemplified as an audio headset receptacle, is connectable via connector 409 to transducers such as speakers 408. The speakers 408 may include open air speakers, headphones, earphone speakers or the like. In this embodiment the audio connector is adapted to receive a 3.5 mm miniature plug of the type having three contacts in order to provide a stereo connection.

The audio signal may also be sent from the audio output to an audio input of another device (not shown) such as the line input of a stereo receiver or the like. The first device 402 may also have input buttons 412, a display 414, a power source (not shown) such as a receptacle for disposable batteries or rechargeable batteries, an AC power input, or the like.

The second device 404 is an audio transmitter that comprises a housing which carries an audio connector 416, which in this exemplary embodiment is an audio headset plug 416. The audio headset plug 416 is an audio input configured to receive audio signals and is adapted to plug into a complimentary audio connector which is a line out providing audio signals. The audio connector 416 is also adapted to connect with the audio connector 406 of the wireless audio device 402 both physically and electrically, to thereby form the wired link 118, 260 in order to receive information therefrom. The second device 404 also includes a transmitter 110, 254 to wirelessly transmit information to a receiver and the audio received through the audio connector 116. In this embodiment the audio connector is a 3.5 mm miniature plug having three contacts in order to provide a stereo connection.

While the present inventions and what is considered presently to be the best modes thereof have been described in a manner that establishes possession thereof by the inventors and that enables those of ordinary skill in the art to make and use the inventions, it will be understood and appreciated that there are many equivalents to the exemplary embodiments disclosed herein and that myriad modifications and variations may be made thereto without departing from the scope of the inventions, which are to be limited not by the exemplary embodiments but by the appended claims.

## Claims

1. A method of securely pairing wireless devices, comprising:
sending (304) from a first device (102) a secure information over a wired link (260); the method **characterized in that** it comprises:
receiving (306) from a second device (104) the confirmation to the secure information over a wireless link (105); and
communicating over the wireless link using at least a portion of the secure information to maintain a secure link.

2. The method as defined in claim 1, wherein the wired link (260) supports communication in only a single direction.

3. The method as defined in claim 1, wherein the secure information includes a device identification required.

4. The method as defined in claim 1, wherein the secure information includes a pin.

5. The method as defined in claim 1, wherein the wireless link (105) supports communication in only a single direction.

6. The method as defined in claim 1, wherein the wired link (260) is formed by coupling a first audio connecter of the first device (102) to a second audio connector of the second device (104).

7. The method as defined in claim 1, further comprising determining that the second device (104) is capable of receiving the secure information.

8. The method as defined in claim 7, further comprising sending a device identification and a code

9. Wireless communication apparatus, comprising:
a first device (102) including an audio headset plug;
a wireless transmitter; and
control circuitry for establishing and maintain pairing;
a second device (104) including an audio headset receptacle complimentary to the audio headset plug;
a transmitter;
a wireless receiver configured to form a wireless link with the wireless transmitter; and
control circuitry to support establishing and maintaining pairing;
wherein, the first device (102) is adapted to communicate secure information for pairing to the second device (104) via the headset plug and headset receptacle when connected, and wherein the second device (104) is adapted to communicate confirmation information to the first via the wireless link to pair the first and second devices.

10. The communication apparatus according to claim 9, wherein the audio headset plug is a mini stereo head set plug.

11. The communication apparatus according to claim 9, wherein the control circuitry is adapted to further support automatic pairing and is adapted to initiate the automatic pairing upon connection of the audio headset plug to the audio headset receptacle.

12. The communication apparatus according to claim 9, wherein the control circuitry is adapted to further support a manual pairing mode that is initiated by the selection of a pairing mode.

13. A method for the secure pairing of wireless devices comprising:
receiving at a first device (102) secure information over a wireless link (105); the method **characterized in that** it comprises:
sending over a wired link (260) a confirmation of the receipt of the secure information;
communicating over the wireless link (105) using at least a portion of the secure information to maintain a secure wireless link.

## Patentansprüche

1. Ein Verfahren zur sicheren Paarung von drahtlosen Geräten, das folgendes umfasst:
Senden (304) von einem ersten Gerät (102) einer sicheren Information über eine Drahtleitung (260); wobei das Verfahren **dadurch gekennzeichnet ist, dass** es folgendes umfasst:
Empfangen (306) von einem zweiten Gerät (104) der Bestätigung für die sichere Information über eine drahtlose Leitung (105); und
Kommunizieren über die drahtlose Leitung unter Verwendung von mindestens einem Teil der sicheren Information zur Aufrechterhaltung einer sicheren Leitung.

2. Das Verfahren nach Anspruch 1, wobei die Drahtleitung (260) die Kommunikation nur in einer einzigen Richtung unterstützt.

3. Das Verfahren nach Anspruch 1, wobei die sichere Information eine erforderliche Gerätidentifizierung einschließt.

4. Das Verfahren nach Anspruch 1, wobei die sichere Information eine PIN einschließt.

5. Das Verfahren nach Anspruch 1, wobei die drahtlose Leitung (105) die Kommunikation nur in einer einzigen Richtung unterstützt.

6. Das Verfahren nach Anspruch 1, wobei die Drahtleitung (260) durch Koppeln eines ersten Audio-Konnektors des ersten Geräts (102) mit einem zweiten Audio-Konnektor des zweiten Geräts (104) gebildet wird.

7. Das Verfahren nach Anspruch 1, das ferner das Bestimmen umfasst, dass das zweite Gerät (104) zum Empfangen der sicheren Information in der Lage ist.

8. Das Verfahren nach Anspruch 7, das ferner das Senden einer Gerätidentifizierung und eines Codes umfasst.

9. Drahtloser Kommunikationsapparat, der folgendes umfasst:
ein erstes Gerät (102), das einen Audio-Headset-Anschluß einschließt;
einen drahtlosen Sender; und
einen Steuerschaltkreis zum Herstellen und Aufrechterhalten einer Paarung;
ein zweites Gerät (104), das eine Audio-Headset-Aufnahme einschließt, die zu dem Audio-Headset-Anschluß komplementär ist;
einen Sender;
einen drahtlosen Empfänger, der zum Bilden einer drahtlosen Leitung mit dem drahtlosen Sender konfiguriert ist; und
einen Steuerschaltkreis zum Unterstützen der Herstellung und Aufrechterhaltung einer Paarung;
wobei das erste Gerät (102) angepasst ist, um sichere Information zur Paarung mit dem zweiten Gerät (104) über den Headset-Anschluß und die Headset-Aufnahme in dem verbundenen Zustand zu kommunizieren, und wobei das zweite Gerät (104) angepasst ist, um eine Bestätigungsinformation zu dem ersten über die drahtlose Leitung zum Paaren des ersten und zweiten Geräts zu kommunizieren.

10. Der Kommunikationsapparat nach Anspruch 9, wobei der Audio-Headset-Anschluß ein Mini-Stereo-Headset-Anschluß ist.

11. Der Kommunikationsapparat nach Anspruch 9, wobei der Steuerschaltkreis angepasst ist, um ferner eine automatische Paarung zu unterstützen, und angepasst ist, um die automatische Paarung bei Verbindung des Audio-Headset-Anschlußes mit der Audio-Headset-Aufnahme zu initiieren.

12. Der Kommunikationsapparat nach Anspruch 9, wobei der Steuerschaltkreis angepasst ist, um ferner einen manuellen Paarungsmodus zu unterstützen, der durch die Auswahl eines Paarungsmodus initiiert wird.

13. Ein Verfahren für die sichere Paarung von drahtlosen Geräten, das folgendes umfasst:
Empfangen an einem ersten Gerät (102) einer sicheren Information über eine drahtlose Leitung (105); wobei das Verfahren **dadurch gekennzeichnet ist, dass** es folgendes umfasst:
Senden über eine Drahtleitung (260) einer Bestätigung des Empfangs der sicheren Information;
Kommunizieren über die drahtlose Leitung (105) unter Verwendung von mindestens einem Teil der sicheren Information zur Aufrechterhaltung einer sicheren drahtlosen Leitung.

## Revendications

1. Procédé d'appariement sécurisé de dispositifs sans fil, comprenant :
- l'envoi (304) à partir d'un premier dispositif (102) d'informations sécurisées sur une liaison filaire (260) ;
le procédé étant **caractérisé par le fait qu'**il comprend :
- la réception (306) à partir d'un second dispositif (104) de la confirmation des informations sécurisées sur une liaison sans fil (105) ; et
- la communication sur la liaison sans fil en utilisant au moins une partie des informations sécurisées pour maintenir une liaison sécurisée.

2. Procédé selon la revendication 1, dans lequel la liaison filaire (260) supporte une communication dans uniquement une seule direction.

3. Procédé selon la revendication 1, dans lequel les informations sécurisées comprennent une identification de dispositif requise.

4. Procédé selon la revendication 1, dans lequel les informations sécurisées comprennent un numéro d'identification personnel (pin).

5. Procédé selon la revendication 1, dans lequel la liaison sans fil (105) supporte une communication dans uniquement une seule direction.

6. Procédé selon la revendication 1, dans lequel la liaison filaire (260) est formée par couplage d'un premier connecteur audio du premier dispositif (102) à un second connecteur audio du second dispositif (104).

7. Procédé selon la revendication 1, comprenant en outre la détermination du fait que le second dispositif (104) est apte à recevoir les informations sécurisées.

8. Procédé selon la revendication 7, comprenant en outre l'envoi d'une identification de dispositif et d'un code.

9. Appareil de communication sans fil, comprenant :
- un premier dispositif (102) comprenant une prise de casque d'écoute audio ;
- un émetteur sans fil ; et
- des éléments de circuit de commande pour établir et maintenir un appariement ;
- un second dispositif (104) comprenant un réceptacle de casque d'écoute audio complémentaire de la prise de casque d'écoute audio ;
- un émetteur ;
- un récepteur sans fil configuré pour former une liaison sans fil avec l'émetteur sans fil ; et
- des éléments de circuit de commande pour supporter l'établissement et le maintien d'un appariement ;
le premier dispositif (102) étant apte à communiquer des informations sécurisées pour un appariement avec le second dispositif (104) par l'intermédiaire de la prise de casque d'écoute et du réceptacle de casque d'écoute lorsqu'ils sont connectés, et le second dispositif (104) étant apte à communiquer des informations de confirmation au premier par l'intermédiaire de la liaison sans fil afin d'apparier les premier et second dispositifs.

10. Appareil de communication selon la revendication 9, dans lequel la prise de casque d'écoute audio est une prise de casque d'écoute stéréo mini.

11. Appareil de communication selon la revendication 9, dans lequel les éléments de circuit de commande sont en outre aptes à supporter un appariement automatique et sont aptes à initier l'appariement automatique lors d'une connexion de la prise de casque d'écoute audio au réceptacle de casque d'écoute audio.

12. Appareil de communication selon la revendication 9, dans lequel les éléments de circuit de commande sont en outre aptes à supporter un mode d'appariement manuel qui est initié par la sélection d'un mode d'appariement.

13. Procédé pour l'appariement sécurisé de dispositifs sans fil, comprenant :
- la réception au niveau d'un premier dispositif (102) d'informations sécurisées sur une liaison sans fil (105) ;
le procédé étant **caractérisé par le fait qu'**il comprend :
- l'envoi sur une liaison filaire (260) d'une confirmation de la réception des informations sécurisées ;
- la communication sur la liaison sans fil (105) en utilisant au moins une partie des informations sécurisées pour maintenir une liaison sans fil sécurisée.
